# EUROPEAN PATENT SPECIFICATION

(11) **EP 3 422 787 B1**
(45) Date of publication and mention of the grant of the patent: **29.04.2020**
(21) Application number: 16895977.3
(22) Date of filing: 31.03.2016
(51) Int. Cl.: H04W 72/12, H04W 72/04

(54) **BUFFER PROCESSING METHOD, AND USER EQUIPMENT**
PUFFERVERARBEITUNGSVERFAHREN UND BENUTZERGERÄT
PROCÉDÉ DE TRAITEMENT DE TAMPON, ET ÉQUIPEMENT D'UTILISATEUR

(43) Date of publication of application: 02.01.2019
(73) Proprietor: Huawei Technologies Co., Ltd., Longgang District Shenzhen, Guangdong 518129 (CN)
(72) Inventor: LI, Mingchao, Shenzhen Guangdong 518129 (CN); XIAO, Xiao, Shenzhen Guangdong 518129 (CN); HAN, Guanglin, Shenzhen Guangdong 518129 (CN)
(74) Representative: Pfenning, Meinig & Partner mbB
(86) International application number: PCT/CN2016/078104
(87) International publication number: WO 2017/166197

(56) References cited:
- CN-A- 102 056 332
- CN-A- 102 149 080
- GB-A- 2 507 490
- US-A1- 2015 326 484
- US-A1- 2016 044 737
- US-A1- 2016 044 737
- US-A1- 2016 081 108
- HUAWEI ET AL: "ProSe-BSR Triggering and Cancelling Mechanisms", 3GPP DRAFT; R2-143458 PROSE-BSR TRIGGERING AND CANCELLING MECHANISMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Dresden, Germany; 20140818 - 20140822 17 August 2014 (2014-08-17), XP050794477, Retrieved from the Internet: URL:http://www.3gpp.org/ftp/Meetings_3GPP_ SYNC/RAN2/Docs/ [retrieved on 2014-08-17]
- PANASONIC: "Traffic switching and Coming back to Uu from PC5", 3GPP DRAFT; R2-156196 TRAFFIC SWITCHING AND COMING BACK TO UU FROM PC5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Anaheim (CA), USA; 20151116 - 20151120 6 November 2015 (2015-11-06), XP051024466, Retrieved from the Internet: URL:http://www.3gpp.org/ftp/tsg_ran/WG2_RL 2/TSGR2_92/Docs/ [retrieved on 2015-11-06]

## Description

### TECHNICAL FIELD

Embodiments of the present invention relate to the field of communications, and more specifically, to a buffer processing method and user equipment.

### BACKGROUND

Currently, automobiles are gaining popularity, and a surge in a quantity of automobiles causes a problem such as urban traffic congestion and frequent accidents. Therefore, there is an urgent need to develop an improved intelligent transportation technology.

A vehicle may obtain road condition information or receive an information service in a timely manner through vehicle-to-vehicle (Vehicle to Vehicle, V2V) communication, vehicle-to-infrastructure (Vehicle to Infrastructure, V2I) communication, vehicle-to-pedestrian (Vehicle to Pedestrian, V2P) communication, or vehicle-to-network (Vehicle to Network, V2N) communication. The foregoing communication modes may be collectively referred to as V2X communication (X represents any device or anything), and an interface on a direct antenna between the vehicle and a peripheral terminal is a PC5 interface.

In an existing wireless communications technology, device-to-device (Device to Device, D2D) becomes increasingly important, and supports direct communication between user equipments (user equipment, UE). Considering that some communication scenarios of a V2X service also belong to direct communication between user equipment and a device, the V2X service may be transmitted in a D2D device-to-device direct communication mode. An interface for direct communication between a vehicle and peripheral user equipment is a PC5 interface. However, sometimes due to blocking by a building or a requirement such as a vehicle needs to send a message to a further distance, the vehicle may transmit information to a base station and then the base station transmits the information to another vehicle (that is, a base station relay transmission mode), to implement Internet of Vehicles communication. An interface between the vehicle and the base station is a Uu interface.

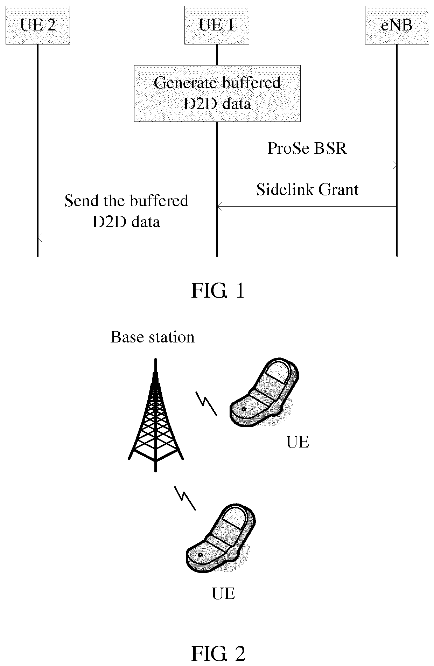

As shown in FIG. 1, when UE 1 needs to send buffered D2D data, the UE 1 needs to request a corresponding time frequency resource from a base station. When the UE 1 generates the D2D buffered data, the UE 1 triggers a proximity service buffer status report (ProSe Buffer Status Report, ProSe BSR). The UE 1 sends the triggered ProSe BSR to the base station (which may be an eNB), so that the base station allocates a corresponding data transmission resource to the UE 1 based on the ProSe BSR, and sends, to the UE 1, a sidelink grant for direct link communication. The grant carries a transmission resource available for the UE 1.

However, when the UE 1 switches from the D2D direct communication mode to the base station relay mode for transmission, the originally buffered D2D data no longer needs to be sent through the PC5 interface. In addition, although the UE 1 switches from the D2D direct communication mode to the base station relay mode to transmit data, the triggered ProSe BSR is still valid. Therefore, the UE 1 still sends the ProSe BSR to the base station, so that the base station allocates a transmission resource on the PC5 interface to the UE 1. Consequently, the allocated resource is wasted, and an extra resource is consumed by signaling interaction that is between the UE 1 and the eNodeB and that is caused by resource request.

US2016/0044737 A1 relates to method of supporting a buffer status report associated with a device-to-device communication. GB 2507490 A describes a first and a second transmission mode in which the UE is capable of carrying out D2D communication only when the UE has been assigned resources for a D2D communication from a base station and a second transmission mode which enables the UE to perform D2D communication regardless of an instruction from the BS. Further prior art useful for understanding the present invention is described in 3GPP TSG RAN WG2 Meeting #87; Dresden, Germany; R2-143458 "ProSe-BSR triggering and cancelling methods", August 18-22, 2014, and in 3GPP TSG RAN WG2 Meeting #92; R2-156196, "Trafffic switching and Coming back to Uu from PC5", Anaheim (CA), USA; November 16-20, 2015.

### SUMMARY

The invention is defined by the independent claims. Further embodiments of the invention are described in the dependent claims. Any "aspect", "embodiment", or "example" described in the following and not falling within the scope of the claimed invention thus defined is to be interpreted as background information provided to facilitate the understanding of the claimed invention. Embodiments of the present invention provide a buffer processing method and a user equipment according to the independent claims to save a network resource.

According to a first aspect, an embodiment of the present invention provides a buffer processing method. The method particularly includes: triggering, by user equipment UE, a direct link buffer status report, where the direct link buffer status report is at least used to report an amount of buffered data generated by the UE for a first service, and the first service is currently transmitted in a D2D device-to-device direct communication mode; and when the UE determines to transmit the first service in a base station relay mode, stopping, by the UE, reporting the amount of the buffered data generated by the UE for the first service to a base station. In this way, the UE stops reporting the amount of the buffered data of the first service to the base station when the UE switches from direct link transmission to base station relay transmission. This prevents the base station from allocating a transmission resource on a PC5 interface to the UE, prevents a resource waste that is caused by signaling interaction required when the base station allocates the transmission resource to the UE, and effectively saves a network resource.

With reference to the first aspect, the stopping, by the UE, reporting the amount of the buffered data generated by the UE for the first service to a base station includes: skipping, by the UE when sending the direct link buffer status report to the base station, adding the amount of the buffered data generated by the UE for the first service. Because the UE directly stops the triggered direct link buffer status report, there is no need to initiate, to the base station, a request for the transmission resource on the PC5 interface, and the base station does not allocate the transmission resource on the PC5 interface to the UE. Therefore, the resource is saved. Alternatively, when sending the direct link buffer status report to the base station, the UE skips adding the amount of the buffered data of the first service, and stops reporting an amount of valid buffered data of the first service on a direct link. This prevents a waste caused when the base station allocates a resource to the UE, and allows another service to report an amount of buffered data in the direct link buffer status report, thereby ensuring that the another service is normally transmitted on the direct link.

With reference to the first aspect, in a first possible implementation of the first aspect, the determining, by the UE, to transmit the first service in a base station relay mode includes: receiving, by the UE, first information sent by the base station, where the first information is used to instruct the UE to switch a transmission mode of the first service from direct link transmission to base station relay transmission; and
determining, based on the first information, to transmit the first service in the base station relay mode; or
determining, by the UE based on preconfigured information, to transmit the first service in the base station relay mode. In this way, the UE may determine, based on an instruction of the first information sent by the base station or based on the preconfigured information, to switch the first service from the direct link transmission to the base station relay transmission.

With reference to the first aspect, or the first possible implementation of the first aspect, in a second possible implementation, the method further includes: discarding, by the UE, unsent buffered data generated by the UE for the first service.

With reference to the first aspect, or the first possible implementation of the first aspect, in a third possible implementation, the method further includes: selecting, by the UE, a transmission resource to send unsent buffered data generated by the UE for the first service. Specifically, the UE automatically selects the transmission resource from a D2D transmission resource pool to send the unsent buffered data generated by the UE for the first service. The D2D transmission resource pool may be obtained by using the preconfigured information, by receiving broadcast information of the base station, or by receiving dedicated control signaling of the base station. In this way, the UE selects the transmission resource to send buffered data that is of the first service and that has not been all sent. Therefore, integrity of to-be-sent data of the first service is ensured, and user experience is improved.

With reference to the first aspect, or the first possible implementation of the first aspect, in a fourth possible implementation, the method includes: receiving, by the UE, data radio bearer DRB configuration information sent by the base station. The method further includes: reconfiguring, as a DRB on a Uu interface by the UE based on the DRB configuration information, a direct link bearer for transmitting the first service, and sending unsent buffered data of the first service by the DRB on the Uu interface. In this way, the UE reconfigures a direct link bearer as the DRB on the Uu interface, and sends the unsent buffered data of the first service by the DRB on the Uu interface. Therefore, a bearer resource is saved, integrity of to-be-sent data of the first service is ensured, and user experience is improved.

With reference to the first aspect, or the first possible implementation of the first aspect, in a fifth possible implementation, the method includes: receiving, by the UE, data radio bearer DRB configuration information sent by the base station. After the determining, by the UE, to transmit the first service in a base station relay mode, the method further includes: setting up, by the UE, a DRB on a Uu interface based on the DRB configuration information, and sending unsent buffered data of the first service by using the DRB. In this way, the UE sets up the DRB on the Uu interface, and sends the unsent buffered data of the first service by the DRB on the Uu interface. Therefore, integrity of to-be-sent data of the first service is ensured, and user experience is improved.

An embodiment of the present invention provides UE. The UE has a function of implementing behavior of the UE in the foregoing method design. The function may be implemented by using hardware, or may be implemented by executing corresponding software by hardware. The hardware or software includes one or more modules that are corresponding to the foregoing function. The module may be software and/or hardware.

For example, according to a second aspect, an embodiment of the present invention particularly provides user equipment, including a receiving unit, a processing unit, and a sending unit. The processing unit is configured to trigger a direct link buffer status report, where the direct link buffer status report is at least used to report an amount of buffered data generated by the UE for a first service, and the first service is currently transmitted in a D2D device-to-device direct communication mode. The processing unit is configured to: determine to transmit the first service in a base station relay mode, and stop reporting the amount of the buffered data generated by the UE for the first service to a base station.

In this way, the UE stops reporting the amount of the buffered data of the first service to the base station when the UE switches from direct link transmission to base station relay transmission. This prevents the base station from allocating a transmission resource on a PC5 interface to the UE, prevents a resource waste that is caused by signaling interaction required when the base station allocates the transmission resource to the UE, and effectively saves a network resource.

With reference to the second aspect, the processing unit is configured to stop reporting the amount of the buffered data generated by the UE for the first service to a base station includes:
the processing unit is configured to instruct the sending unit to skip, when sending the direct link buffer status report, adding the amount of the buffered data generated by the UE for the first service. Because the processing unit directly stops the triggered direct link buffer status report, there is no need to initiate, to the base station, a request for the transmission resource, on the PC5 interface, and the base station does not allocate the transmission resource on the PC5 interface to the UE. Therefore, the resource is saved. Alternatively, the processing unit is configured to: instruct the sending unit to skip, when sending the direct link buffer status report to the base station, adding the amount of the buffered data of the first service, and stop reporting an amount of valid buffered data of the first service on a direct link. This prevents a waste caused when the base station allocates a resource to the UE, and allows another service to report an amount of buffered data in the direct link buffer status report, thereby ensuring that the another service is normally transmitted on the direct link.

With reference to the second aspect, in a first possible implementation of the second aspect, the receiving unit is configured to receive first information sent by the base station, where the first information is used to instruct the UE to switch a transmission mode of the first service from direct link transmission to base station relay transmission; and that the processing unit is configured to determine to transmit the first service in a base station relay mode includes: the processing unit is configured to determine, based on the first information, to transmit the first service in the base station relay mode; or the processing unit is configured to determine, based on preconfigured information, to transmit the first service in the base station relay mode. In this way, the UE may determine, based on an instruction of the first information sent by the base station or based on the preconfigured information, to switch the first service from the direct link transmission to the base station relay transmission.

With reference to the second aspect, or the first possible implementation of the second aspect, in a second possible implementation of the second aspect, the processing unit is further configured to discard unsent buffered data generated by the UE for the first service.

With reference to the second aspect, the first possible implementation of the second aspect, or the second possible implementation of the second aspect, in a fourth possible implementation of the second aspect, the processing unit is further configured to select a transmission resource to send unsent buffered data generated by the UE for the first service. In this way, the UE selects the transmission resource to send buffered data that is of the first service and that has not been all sent. Therefore, integrity of to-be-sent data of the first service is ensured, and user experience is improved.

With reference to the second aspect, or the first possible implementation of the second aspect, in a third possible implementation of the second aspect, the receiving unit is further configured to receive data radio bearer DRB configuration information sent by the base station; the processing unit is further configured to reconfigure, as a DRB on a Uu interface based on the DRB configuration information, a direct link bearer for transmitting the first service; and the processing unit is further configured to instruct the sending unit to send unsent buffered data of the first service by the DRB on the Uu interface. In this way, the UE reconfigures a direct link bearer as the DRB on the Uu interface, and sends the unsent buffered data of the first service by the DRB on the Uu interface. Therefore, a bearer resource is saved, integrity of to-be-sent data of the first service is ensured, and user experience is improved.

With reference to the second aspect, or the first possible implementation of the second aspect, in a fourth possible implementation of the second aspect, the receiving unit is further configured to receive data radio bearer DRB configuration information sent by the base station; and the processing unit is further configured to: set up a DRB on a Uu interface based on the DRB configuration information, and instruct the sending unit to send unsent buffered data of the first service by using the DRB on the Uu interface. In this way, the UE newly sets up the DRB on the Uu interface, and sends the unsent buffered data of the first service by the DRB on the Uu interface. Therefore, integrity of to-be-sent data of the first service is ensured, and user experience is improved.

According to a third aspect, an embodiment of the present invention provides user equipment. The UE has a function of implementing behavior of the UE in the foregoing method design.

In a possible design, a structure of the UE particularly includes a receiver and a processor, the processor is configured to trigger a direct link buffer status report, where the direct link buffer status report is at least used to report an amount of buffered data generated by the UE for a first service, and the first service is currently transmitted in a D2D device-to-device direct communication mode; and the processor is configured to determine to transmit the first service in a base station relay mode, and stop reporting the amount of the buffered data generated by the UE for the first service to a base station.

According to a fourth aspect, an embodiment of the present invention provides a computer storage medium. The computer storage medium is configured to store a computer software instruction used by the foregoing UE, and includes a program designed to implement the foregoing aspects.

Compared with the prior art, the solutions provided in the present application prevent a resource waste caused when the base station allocates the transmission resource on the PC5 interface to the user equipment, and effectively save a network resource.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and a person of ordinary skill in the art can derive other implementations from these accompanying drawings without creative efforts. All of the embodiments or the implementations shall fall within the protection scope of the present application.
FIG. 1 is a schematic flowchart of a D2D technology in the prior art;
FIG. 2 is a schematic diagram of a network architecture of a communications system on which an embodiment of the present invention is based;
FIG. 3 is a schematic flowchart of a buffer processing method according to an embodiment of the present invention;
FIG. 4 is a possible schematic structural diagram of user equipment according to an embodiment of the present invention; and
FIG. 5 is a possible schematic structural diagram of user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present application.

A network architecture and a service scenario that are described in the embodiments of the present invention are used to describe the technical solutions in the embodiments of the present invention more clearly, but do not limit the technical solutions provided in the embodiments of the present invention. A person of ordinary skill in the art may know that the technical solutions provided in the embodiments of the present invention are also applicable to similar technical problems as the network architecture evolves and a new service scenario appears.

It should be understood that, the technical solutions of the embodiments of the present invention may be applied to various communications systems, such as the Global System for Mobile Communications (Global System for Mobile Communications, "GSM" for short), a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short) system, a Long Term Evolution (Long Term Evolution, "LTE" for short) system, the Universal Mobile Telecommunications System (Universal Mobile Telecommunications System, "UMTS" for short), and a Worldwide Interoperability for Microwave Access (Worldwide Interoperability for Microwave Access, "WiMAX" for short) communications system. The present application may be further applied to another communications system. Details are not described herein.

FIG. 2 is a schematic diagram of a network architecture of a communications system (for example, an LTE system) on which an embodiment of the present invention is based. Alternatively, this embodiment of the present invention may be based on another network architecture. This is not limited in this embodiment of the present invention. In the network architecture, communication between UEs is performed with the help of a base station.

The user equipment UE related to this application may be various devices with a wireless communication function, for example, a handheld device, an in-vehicle device, a wearable device, a computing device, or another processing device that is connected to a wireless modem, and may be user equipment (User Equipment, UE for short), mobile stations (Mobile station, MS for short), terminals (terminal), terminal equipment (Terminal Equipment), or the like in various forms. For ease of description, in this application, the foregoing devices are collectively referred to as user equipment or UE. A base station (base station, BS for short) related to the present application is an apparatus deployed in a wireless access network to provide the wireless communication function for the UE. The base station may include a macro base station, a micro base station, a relay station, and an access point in various forms. In systems using different wireless access technologies, devices with a base station function may have different names. For example, in an LTE network, the device is referred to as an evolved node B (evolved NodeB, eNB or eNodeB for short), and in a 3rd- Generation 3G network, the device is referred to as a node B (NodeB). For ease of description, in this application, the foregoing apparatuses that provide the wireless communication function for the UE are collectively referred to as a base station or a BS.

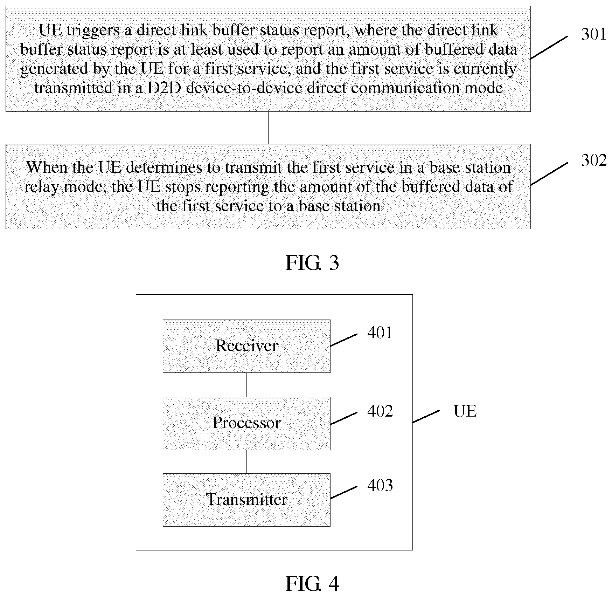

FIG. 3 is a schematic flowchart of a buffer processing method according to an embodiment of the present invention.

S301. UE triggers a direct link buffer status report, where the direct link buffer status report is at least used to report an amount of buffered data generated by the UE for a first service, and the first service is currently transmitted in a D2D device-to-device direct communication mode.

The UE sends data of the first service to another UE in a direct communication mode. The UE triggers the direct link buffer status report, and the direct link buffer status report is at least used to report the amount of the buffered data generated by the UE for the first service, so that the base station allocates a direct link time frequency resource to the UE based on the direct link buffer status report. The direct link buffer status report may be a ProSe BSR or a sidelink BSR, or may be a buffer status report specially used to request a direct communication resource for the first service. This is not limited in the present application.

The first service is currently transmitted in the D2D device-to-device direct communication mode. In other words, the first service is transmitted in the D2D device-to-device direct communication mode at this time.

Specifically, the first service may be a V2X service, or may be another type of service bound with the direct link buffer status report. This is not limited in this embodiment of the present invention.

That the UE sends data of the first service to another UE in a direct communication mode means that the UE sends the data of the first service by using a direct link bearer. Optionally, the direct link bearer may be a dedicated bearer for the first service. This is not limited in the present application.

There may be a plurality of conditions for triggering the direct link buffer status report. For example, the direct link buffer status report is triggered when the UE generates the buffered data of the first service and a logical channel of the buffered data has a highest priority in a service group in which the first service is located. Certainly, the trigger condition may be set to another condition. This is not limited herein.

S302. When the UE determines to transmit the first service in a base station relay mode, the UE stops reporting the amount of the buffered data of the first service to a base station.

Specifically, the UE receives first information sent by the base station, and the first information is used to instruct the UE to switch a transmission mode of the first service from direct link transmission to base station relay transmission. Alternatively, the UE determines, based on preconfigured information, to transmit the first service in the base station relay mode, and the preconfigured information may be preconfigured in the UE. The base station relay transmission may also be referred to as Uu link transmission. This is not limited in the present application.

Optionally, the first information may be RRC dedicated control signaling, or may be system broadcast information, or may be a MAC control element (MAC CE, MAC Control. Elements).

Optionally, the first information may include DRB configuration information of a Uu interface. After receiving the first information, the UE sets up a corresponding DRB bearer on the Uu interface based on the DRB configuration information and subsequently sends the data of the first service by using the corresponding bearer. Optionally, the first information may include interface switching instruction information. After receiving the interface switching instruction information, the UE sets up or starts a corresponding DRB bearer on a Uu interface and subsequently sends the data of the first service by using the corresponding DRB bearer. Configuration information of the corresponding DRB bearer on the Uu interface may be obtained in advance, may be obtained by using RRC dedicated control signaling, may be obtained by using system information, or may be obtained by using preconfigured information. This is not limited herein.

Specifically, that the UE stops reporting the amount of the buffered data of the first service to a base station includes: skipping, by the UE when sending the direct link buffer status report to the base station, adding the amount of the buffered data of the first service.

In this way, the UE stops reporting the amount of the buffered data of the first service to the base station when the UE switches from the direct link transmission to the base station relay transmission. This prevents the base station from allocating a transmission resource on a PC5 interface to the UE, prevents a resource waste that is caused by signaling interaction required when the base station allocates the transmission resource to the UE, and effectively saves a network resource.

The stopping, by the UE, the triggered direct link buffer status report includes: A MAC layer of the UE stops the triggered direct link buffer status report when determining that an upper layer configures a transmission mode of the first service as the base station relay transmission.

Alternatively, the skipping, by the UE when sending the direct link buffer status report to the base station, adding the amount of the buffered data of the first service includes: After determining that an upper layer configures a transmission mode of the first service as the base station relay transmission, a MAC layer of the UE no longer reports, in the direct link buffer status report, the amount of the buffered data of the first service. Optionally, an amount of valid buffered data on all or part of logical channels other than a logical channel group to which the first service belongs is reported in the direct link buffer status report.

Optionally, when only the buffered data of the first service needs to be sent in a buffer area of the UE, if a MAC layer determines that an upper layer configures a transmission mode of the first service as the base station relay transmission, the direct link buffer status report may be stopped. Alternatively, when the direct link buffer status report is used only for the first service, if a MAC layer determines that an upper layer configures a transmission mode of the first service as the base station relay transmission, the direct link buffer status report may be stopped.

In this way, when determining that the transmission mode of the first service switches from the direct communication mode to the base station relay transmission, the UE stops reporting an amount of valid buffered data of the first service on a direct link. This prevents a waste caused when the base station allocates a resource to the UE. Further, when the UE determines to transmit the first service in the base station relay mode, for unsent buffered data generated by the UE for the first service, the UE may perform processing in the following manners:

The UE discards the buffered data of the first service. Specifically, the buffered data of the first service includes all buffered data in a Packet Data Convergence Protocol (packet data convergence protocol, PDCP) entity and a Radio Link Control (radio link control, RLC) entity that perform the first service. Optionally, all the discarded data includes a service data unit (service data unit, SDU) that has not been processed by the PDCP in the PDCP entity and an SDU that has been processed by the PDCP but its corresponding PDU is not delivered to a lower layer by the PDCP. When the UE determines to switch the transmission mode of the first service to the base station relay transmission, the corresponding PDCP entity discards the PDCP SDU. Optionally, all the discarded data further includes all buffered data of the first service at an RLC layer. When the UE determines to switch the transmission mode of the first service to the base station relay transmission, an RLC entity that is corresponding to the first service and is in the UE discards the buffered data.

Optionally, when the UE determines to switch the transmission mode of the first service to the base station relay transmission, the UE may release a bearer occupied by the first service or a logical channel occupied by the first service. Specifically, the release may include releasing a PDCP entity corresponding to the first service and an RLC entity corresponding to the first service. Optionally, the release may include restarting a MAC entity dedicated to a direct link.

Alternatively, when the UE determines to switch the transmission mode of the first service to base station relay transmission, the UE selects a transmission resource to send buffered data that is of the first service and that has not been all sent. Specifically, the UE automatically selects the transmission resource from a D2D transmission resource pool to send the unsent buffered data generated by the UE for the first service. The D2D transmission resource pool may be obtained by using the preconfigured information, by receiving broadcast information of the base station, or by receiving dedicated control signaling of the base station. Optionally, a MAC layer of the UE configures, as an automatic selection transmission mode, a logical channel corresponding to the data of the first service, and the MAC layer automatically selects the transmission resource from a direct link resource pool that is obtained in advance, to send the unsent data of the first service.

In this way, the UE selects the transmission resource to send the buffered data that is of the first service and that has not been all sent. Therefore, integrity of to-be-sent data of the first service is ensured, and user experience is improved.

Alternatively, when the UE determines to switch the transmission mode of the first service to the base station relay transmission, the UE reconfigures, as a data radio bearer DRB on a Uu interface, a direct link bearer (or a logical channel) for transmitting the first service, and sends the unsent buffered data of the first service by using the DRB on the Uu interface. The direct link bearer may be a dedicated bearer. This is not limited in the present application. Specifically, for the direct link bearer for transmitting the first service on a direct link, its PDCP entity and its RLC entity use configurations that are required for direct link transmission, and a MAC layer uses a MAC entity dedicated to direct link transmission. After the first information is received, a PDCP layer buffers, as valid data, an SDU that has not been processed by the PDCP and an SDU that has been processed by the PDCP but its corresponding PDU is not delivered to a lower layer by the PDCP, and the PDCP entity and the RLC entity reconfigure related entities based on DRB configuration information that is carried in the first information or that is obtained in advance. After the reconfiguration, the PDCP entity and the RLC entity corresponding to the direct link bearer for the first service are updated to entities that have a corresponding transmission function of the Uu interface, and the MAC entity corresponding to the dedicated bear for the first service is changed to a MAC entity on the Uu interface. After the UE determines to switch the transmission mode of the first service to the base station relay transmission, the data buffered by the PDCP layer is sent on the Uu interface by using new configurations. Optionally, after the dedicated bearer for the first service is configured for the Uu interface, if there is the buffered data of the first service in the buffer area, a buffer status report BSR is triggered to request to the base station for a transmission resource on the Uu interface.

In this way, the UE reconfigures the direct link bearer as the DRB on the Uu interface, and sends the unsent buffered data of the first service by using the DRB on the Uu interface. Therefore, a bearer resource is saved, integrity of to-be-sent data of the first service is ensured, and user experience is improved.

Alternatively, when the UE determines to switch the transmission mode of the first service to the base station relay transmission, the UE sets up a new DRB on the Uu interface, and sends the unsent buffered data of the first service by using the DRB. Specifically, the unsent buffered data of the first service is forwarded from an original direct link bearer buffer area of the first service to a new DRB buffer area, and then remaining data is sent by using the DRB. Specifically, after receiving the first information, the UE sets up the new DRB on the Uu interface, and the newly set-up DRB uses a new PDCP entity and a new RLC entity. After the DRB is set up, the UE forwards the buffered data of the first service to a newly set-up DRB buffer area, and then sends the buffered data of the first service on the Uu interface by using the DRB. Optionally, when the UE determines that all data on the direct link bearer for the first service has been forwarded to the DRB buffer area, the direct link bearer for the first service may be released. Specifically, the release may include releasing the PDCP entity and the RLC entity, and optionally, may include restarting a MAC entity dedicated to a direct link.

In this way, the UE sets up the DRB on the Uu interface, and sends the unsent buffered data of the first service by using the DRB on the Uu interface. Therefore, integrity of to-be-sent data of the first service is ensured, and user experience is improved.

It can be understood that to implement the foregoing functions, network elements, for example, the UE and the base station, include a corresponding hardware structure and/or a corresponding software module that perform/performs the functions. A person skilled in the art may easily be aware that, with reference to the units and algorithm steps in the examples described in the embodiments disclosed in this specification, the present application can be implemented by using hardware or by using a combination of hardware and computer software. Whether a specific function is performed by computer software driving hardware depends on a particular application and a design constraint condition of the technical solutions. A person skilled in the art may use different methods to implement the described functions for each particular application, but it shall not be considered that the implementation goes beyond the scope of the present application.

FIG. 4 is a possible schematic structural diagram of user equipment according to an embodiment of the present invention. The UE includes a receiver 401, a processor (or a controller) 402, and a transmitter 403. The UE may be configured to perform steps of the foregoing method.

The processor 402 is configured to trigger a direct link buffer status report, where the direct link buffer status report is at least used to report an amount of buffered data generated by the UE for a first service, and the first service is currently transmitted in a D2D device-to-device direct communication mode. The processor 402 is configured to: determine to transmit the first service in a base station relay mode, and stop reporting the amount of the buffered data generated by the UE for the first service to a base station.

Further, that the processor 402 is configured to stop reporting the amount of the buffered data generated by the UE for the first service to a base station includes the processor 402 is configured to instruct the transmitter 403 to skip, when sending the direct link buffer status report, adding the amount of the buffered data generated by the UE for the first service.

Further, the receiver 401 is configured to receive first information sent by the base station, where the first information is used to instruct the UE to switch a transmission mode of the first service from direct link transmission to base station relay transmission. That the processor 402 is configured to determine to transmit the first service in a base station relay mode includes: the processor 402 is configured to determine, based on the first information, to transmit the first service in the base station relay mode; or the processor 402 is configured to determine, based on preconfigured information, to transmit the first service in the base station relay mode. Optionally, the processor 402 is further configured to: discard unsent buffered data generated by the UE for the first service; or select a transmission resource to send unsent buffered data generated by the UE for the first service. Alternatively, the receiver 401 is further configured to receive data radio bearer DRB configuration information sent by the base station. The processor 402 is further configured to reconfigure, as a DRB on a Uu interface based on the DRB configuration information, a direct link bearer for transmitting the first service. The processor 402 is further configured to instruct the transmitter 403 to send unsent buffered data of the first service by the DRB on the Uu interface. Alternatively, the receiver 401 is further configured to receive data radio bearer DRB configuration information sent by the base station. The processor 402 is further configured to: set up a DRB on a Uu interface based on the DRB configuration information, and instruct the transmitter 403 to send unsent buffered data of the first service by using the DRB on the Uu interface.

In this way, the UE reconfigures a direct link bearer as the DRB on the Uu interface, and sends the unsent buffered data of the first service by the DRB on the Uu interface. Therefore, a bearer resource is saved, integrity of to-be-sent data of the first service is ensured, and user experience is improved.

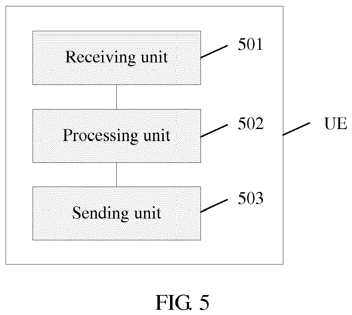

FIG. 5 is a possible schematic structural diagram of user equipment according to an embodiment of the present invention. The UE can perform the foregoing method. As shown in FIG. 5, the UE includes a receiving unit 501, a processing unit 502, and a sending unit 503. The processing unit 502 is configured to trigger a direct link buffer status report, where the direct link buffer status report is at least used to report an amount of buffered data generated by the UE for a first service, and the first service is currently transmitted in a D2D device-to-device direct communication mode. The processing unit 502 is configured to: determine to transmit the first service in a base station relay mode, and stop reporting the amount of the buffered data generated by the UE for the first service to a base station.

Specifically, the processing unit 502 is configured to instruct the sending unit to skip, when sending the direct link buffer status report, adding the amount of the buffered data generated by the UE for the first service.

Specifically, the receiving unit 501 is configured to receive first information sent by the base station, where the first information is used to instruct the UE to switch a transmission mode of the first service from direct link transmission to base station relay transmission. That the processing unit 502 is configured to determine to transmit the first service in a base station relay mode includes: the processing unit 502 is configured to determine, based on the first information, to transmit the first service in the base station relay mode; or the processing unit 502 is configured to determine, based on preconfigured information, to transmit the first service in the base station relay mode.

Optionally, the processing unit 502 is further configured to discard unsent buffered data generated by the UE for the first service; or the processing unit 502 is further configured to select a transmission resource to send unsent buffered data generated by the UE for the first service. Alternatively, the receiving unit 501 is further configured to receive data radio bearer DRB configuration information sent by the base station. The processing unit 502 is further configured to: set up a DRB on a Uu interface based on the DRB configuration information, and instruct the sending unit 503 to send unsent buffered data of the first service by using the DRB on the Uu interface. Alternatively, the receiving unit 501 is further configured to receive data radio bearer DRB configuration information sent by the base station. The processing unit 502 is further configured to reconfigure, as a DRB on a Uu interface based on the DRB configuration information, a direct link bearer used for transmitting the first service. The processing unit 502 is further configured to instruct the sending unit 503 to send unsent buffered data of the first service by the DRB on the Uu interface.

In this way, the solutions provided in the embodiments of the present invention prevent a resource waste caused when the base station allocates a transmission resource on a PC5 interface to the user equipment, and effectively save a network resource.

It should be understood that corresponding content can be mutually cited between the foregoing method and device embodiments according to the present application. This is not limited in the present application.

It should be understood that the "first" in the present application does not limit a service or information.

It may be understood that FIG. 4 and FIG. 5 show merely simplified designs of the UE. In actual application, the UE may include any quantity of transmitters, receivers, processors, controllers, memories, communication units, and the like, and all UE that can implement the present application fall within the protection scope of the present application.

The controller/processor configured to perform functions of the UE or the base station in the present application may be a central processing unit (CPU), a general purpose processor, a digital signal processor (DSP), an application-specific integrated circuit (ASIC), a field programmable gate array (FPGA) or another programmable logical device, a transistor logical device, a hardware component, or any combination thereof. The controller/processor may implement or execute various example logical blocks, modules, and circuits described with reference to content disclosed in the present application. Alternatively, the processor may be a combination of processors implementing a computing function, for example, a combination of one or more microprocessors, or a combination of a DSP and a microprocessor.

Method or algorithm steps described in combination with the content disclosed in the present application may be implemented by hardware, or may be implemented by a processor by executing a software instruction. The software instruction may be executed by a corresponding software module. The software module may be located in a RAM memory, a flash memory, a ROM memory, an EPROM memory, an EEPROM memory, a register, a hard disk, a removable magnetic disk, a CD-ROM, or a storage medium of any other form known in the art. For example, a storage medium is coupled to a processor, so that the processor can read information from the storage medium and write information into the storage medium. Certainly, the storage medium may be a component of the processor. The processor and the storage medium may be located in the ASIC. In addition, the ASIC may be located in user equipment. Certainly, the processor and the storage medium may exist in the user equipment as discrete components.

A person skilled in the art should be aware that in the foregoing one or more examples, functions described in the present application may be implemented by hardware, software, firmware, or any combination thereof. When the present application is implemented by software, the foregoing functions may be stored in a computer-readable medium or transmitted as one or more instructions or code in the computer-readable medium. The computer-readable medium includes a computer storage medium and a communications medium, and the communications medium includes any medium that enables a computer program to be transmitted from one place to another. The storage medium may be any available medium accessible to a general-purpose or dedicated computer.

The objectives, technical solutions, and benefits of the present application are further described in detail in the foregoing specific implementations. It should be understood that the foregoing descriptions are merely specific implementations of the present application, but are not intended to limit the protection scope of protection as set forth in the claims. Any modification, equivalent replacement, or improvement made based on the technical solutions of the present application shall fall within this protection scope of the present application.

## Claims

1. A buffer processing method, comprising:
triggering (301), by user equipment, UE, a direct link buffer status report, wherein the direct link buffer status report is at least used to report an amount of buffered data generated by the UE for a first service, and the first service is currently transmitted in a device-to-device, D2D direct communication mode; and
when the UE determines to transmit the first service in a different mode, stopping (302), by the UE, reporting the amount of the buffered data generated by the UE for the first service to a base station
**characterized in that** the different mode is a base station relay mode, wherein the stopping (302), by the UE, reporting the amount of the buffered data generated by the UE for the first service to a base station comprises:
skipping, by the UE when sending the direct link buffer status report to the base station, adding the amount of the buffered data generated by the UE for the first service.

2. The method according to claim 1, wherein the determining (301), by the UE, to transmit the first service in a base station relay mode comprises:
receiving, by the UE, first information sent by the base station, wherein the first information is used to instruct the UE to switch a transmission mode of the first service from direct link transmission to base station relay transmission; and
determining, based on the first information, to transmit the first service in the base station relay mode; or
determining, by the UE based on preconfigured information, to transmit the first service in the base station relay mode.

3. The method according to claim 1 or 2, wherein after the determining (301), by the UE, to transmit the first service in a base station relay mode, the method further comprises:
discarding, by the UE, unsent buffered data generated by the UE for the first service.

4. The method according to claim 1 or 2, wherein after the determining (301), by the UE, to transmit the first service in a base station relay mode, the method further comprises:
selecting, by the UE, a transmission resource to send unsent buffered data generated by the UE for the first service.

5. The method according to claim 1 or 2, wherein the method comprises:
receiving, by the UE, data radio bearer, DRB configuration information sent by base station; and
after the determining (301), by the UE, to transmit the first service in a base station relay mode, the method further comprises:
reconfiguring, as a DRB on a Uu interface by the UE based on the DRB configuration information, a direct link bearer for transmitting the first service, and sending unsent buffered data of the first service by the DRB on the Uu interface.

6. The method according to claim 1 or 2, wherein the method comprises:
receiving, by the UE, data radio bearer, DRB configuration information sent by base station; and
after the determining (301), by the UE, to transmit the first service in a base station relay mode, the method further comprises:
setting up, by the UE, a DRB on a Uu interface based on the DRB configuration information, and sending unsent buffered data of the first service by using the DRB on the Uu interface.

7. The method according to claim 5 or 6, wherein the DRB configuration information may be comprised in the first information.

8. User equipment, UE, comprising a receiving unit (401), a processing unit (402), and a sending unit (403), wherein:
the processing unit (402) is configured to trigger a direct link buffer status report, wherein the direct link buffer status report is at least used to report an amount of buffered data generated by the UE for a first service, and the first service is currently transmitted in a device-to-device, D2D direct communication mode; and
the processing unit (402) is configured to: determine to transmit the first service in a different mode, and stop reporting the amount of the buffered data generated by the UE for the first service to a base station
**characterized in that** the different mode is a base station relay mode, wherein that the processing unit (402) is configured to stop reporting the amount of the buffered data generated by the UE for the first service to a base station comprises:
the processing unit (402) is configured to instruct the sending unit to skip, when sending the direct link buffer status report, adding the amount of the buffered data generated by the UE for the first service.

9. The user equipment according to claim 8, wherein:
the receiving unit (4019 is configured to receive first information sent by the base station, wherein the first information is used to instruct the UE to switch a transmission mode of the first service from direct link transmission to base station relay transmission; and
that the processing unit (402) is configured to determine to transmit the first service in a base station relay mode comprises: the processing unit is configured to determine, based on the first information, to transmit the first service in the base station relay mode; or
the processing unit (402) is configured to determine, based on preconfigured information, to transmit the first service in the base station relay mode.

10. The user equipment according to claim 8 or 9, wherein the processing unit (402) is further configured to discard unsent buffered data generated by the UE for the first service.

11. The user equipment according to claim 8 or 9, wherein the processing unit (402) is further configured to select a transmission resource to send unsent buffered data generated by the UE for the first service.

12. The user equipment according to claim 8 or 9, wherein:
the receiving unit (401) is further configured to receive data radio bearer, DRB configuration information sent by base station;
the processing unit (402) is further configured to reconfigure, as a DRB on a Uu interface based on the DRB configuration information, a direct link bearer for transmitting the first service; and
the processing unit (402) is further configured to instruct the sending unit to send unsent buffered data of the first service by the DRB on the Uu interface.

13. The user equipment according to claim 8 or 9, wherein:
the receiving unit (401) is further configured to receive data radio bearer, DRB configuration information sent by base station; and
the processing unit (402) is further configured to: set up a DRB on a Uu interface based on the DRB configuration information, and instruct the sending unit to send unsent buffered data of the first service by using the DRB on the Uu interface.

## Patentansprüche

1. Pufferverarbeitungsverfahren, Folgendes umfassend:
Auslösen (301) einer Direktverknüpfungspufferstatusmeldung durch eine Benutzereinrichtung (*user equpiment* - UE), wobei die Direktverknüpfungspufferstatusmeldung wenigstens verwendet wird, um eine Menge durch die UE für einen ersten Dienst erzeugter gepufferter Daten zu melden, und wobei der erste Dienst gegenwärtig in einem Vorrichtung-zu-Vorrichtung(*device-to-device* - D2D)-Direktkommunikationsmodus übertragen wird; und
wenn die UE bestimmt, den ersten Dienst in einem unterschiedlichen Modus zu übertragen, Beenden (302) des Meldens, durch die UE, der Menge der durch die UE für den ersten Dienst erzeugten gepufferten Daten an eine Basisstation, **dadurch gekennzeichnet, dass** der unterschiedliche Modus ein Basisstationsweiterleitungsmodus ist, wobei das Beenden (302) des Meldens, durch die UE, der Menge der durch die UE für den ersten Dienst erzeugten gepufferten Daten an die erste Basisstation Folgendes umfasst:
Überspringen eines Hinzufügens der Menge der durch die UE für den ersten Dienst erzeugten gepufferten Daten durch die UE, wenn die Direktverknüpfungspufferstatusmeldung an die Basisstation gesendet wird.

2. Verfahren nach Anspruch 1, wobei das Bestimmen (301) durch die UE, den ersten Dienst in einem Basisstationsweiterleitungsmodus zu übertragen, Folgendes umfasst:
Empfangen der von der Basisstation gesendeten ersten Informationen durch die UE, wobei die ersten Informationen verwendet werden, um die UE anzuweisen, einen Übertragungsmodus des ersten Dienstes von einer Direktverknüpfungsübertragung zu einer Basisstationsweiterleitungsübertragung umzuschalten; und
Bestimmen, den ersten Dienst in dem Basisstationsweiterleitungsmodus zu übertragen, basierend auf den ersten Informationen; oder
Bestimmen, den ersten Dienst in dem Basisstationsweiterleitungsmodus zu übertragen, durch die UE basierend auf vorkonfigurierten Informationen.

3. Verfahren nach Anspruch 1 oder 2, wobei nach dem Bestimmen (301), den ersten Dienst in einem Basisstationsweiterleitungsmodus zu übertragen, durch die UE, das Verfahren ferner Folgendes umfasst:
Verwerfen nicht gesendeter durch die UE für den ersten Dienst erzeugter gepufferter Daten durch die UE.

4. Verfahren nach Anspruch 1 oder 2, wobei nach dem Bestimmen (301), den ersten Dienst in einem Basisstationsweiterleitungsmodus zu übertragen, durch die UE, das Verfahren ferner Folgendes umfasst:
Auswählen einer Übertragungsressource durch die UE, um nicht gesendete durch die UE für den ersten Dienst erzeugte gepufferte Daten zu senden.

5. Verfahren nach Anspruch 1 oder 2, wobei das Verfahren Folgendes umfasst:
Empfangen von von der Basisstation gesendeten Datenfunkträger(*data radio bearer-* DRB)konfigurationsinformationen; und
wobei nach dem Bestimmen (301) durch die UE, den ersten Dienst in einem Basisstationsweiterleitungsmodus zu übertragen, das Verfahren ferner Folgendes umfasst:
Neukonfigurieren eines Direktverknüpfungsträgers zum Übertragen des ersten Dienstes als einen DRB auf einer Uu-Schnittstelle durch die UE basierend auf den DRB-Konfigurationsinformationen und Senden nicht gesendeter gepufferter Daten des ersten Dienstes durch den DRB auf der Uu-Schnittstelle.

6. Verfahren nach Anspruch 1 oder 2, wobei das Verfahren Folgendes umfasst:
Empfangen von von der Basisstation gesendeten Datenfunkträger(DRB)konfigurationsinformationen; und
wobei nach dem Bestimmen (301) durch die UE, den ersten Dienst in einem Basisstationsweiterleitungsmodus zu übertragen, das Verfahren ferner Folgendes umfasst:
Einrichten eines DRB auf einer Uu-Schnittstelle durch die UE basierend auf den DRB-Konfigurationsinformationen und Senden nicht gesendeter gepufferter Daten des ersten Dienstes durch Verwenden des DRB auf der Uu-Schnittstelle.

7. Verfahren nach Anspruch 5 oder 6, wobei die DRB-Konfigurationsinformationen in den ersten Informationen enthalten sein können.

8. Benutzereinrichtung (UE), umfassend eine Empfangseinheit (401), eine Verarbeitungseinheit (402) und eine Sendeeinheit (403), wobei:
die Verarbeitungseinheit (402) konfiguriert ist, um eine Direktverknüpfungspufferstatusmeldung auszulösen, wobei die Direktverknüpfungspufferstatusmeldung wenigstens verwendet wird, um eine Menge durch die UE für einen ersten Dienst erzeugter gepufferter Daten zu melden, und wobei der erste Dienst gegenwärtig in einem Vorrichtung-zu-Vorrichtung(D2D)-Direktkommunikationsmodus übertragen wird; und
die Verarbeitungseinheit (402) für Folgendes konfiguriert ist:
Bestimmen, den ersten Dienst in einem unterschiedlichen Modus zu übertragen, und Beenden, die Menge der durch die UE für den ersten Dienst erzeugten gepufferten Daten an eine Basisstation zu melden, **dadurch gekennzeichnet, dass** der unterschiedliche Modus ein Basisstationsweiterleitungsmodus ist, wobei, dass die Verarbeitungseinheit (402) konfiguriert ist, um das Melden der Menge der durch die UE für den ersten Dienst erzeugten gepufferten Daten an eine Basisstation zu beenden, Folgendes umfasst:
die Verarbeitungseinheit (402) ist konfiguriert, um die Sendeeinheit anzuweisen, das Hinzufügen der Menge der durch die UE für den ersten Dienst erzeugten gepufferten Daten zu überspringen, wenn die Direktverknüpfungspufferstatusmeldung gesendet wird.

9. Benutzereinrichtung nach Anspruch 8, wobei:
die Empfangseinheit (4019 konfiguriert ist, um erste von der Basisstation gesendete Informationen zu empfangen, wobei die ersten Informationen verwendet werden, um die UE anzuweisen, einen Übertragungsmodus des ersten Dienstes von Direktverknüpfungsübertragung zu Basisstationsweiterleitungsübertragung umzuschalten; und
dass die Verarbeitungseinheit (402) konfiguriert ist, um zu bestimmen, den ersten Dienst in einem Basisstationsweiterleitungsmodus zu übertragen, Folgendes umfasst:
die Verarbeitungseinheit ist konfiguriert, um basierend auf den ersten Informationen zu bestimmen, den ersten Dienst in dem Basisstationsweiterleitungsmodus zu übertragen; oder
die Verarbeitungseinheit (402) ist konfiguriert, um basierend auf vorkonfigurierten Informationen zu bestimmen, den ersten Dienst in dem Basisstationsweiterleitungsmodus zu übertragen.

10. Benutzereinrichtung nach Anspruch 8 oder 9, wobei die Verarbeitungseinheit (402) ferner konfiguriert ist, um nicht gesendete durch die UE für den ersten Dienst erzeugte gepufferte Daten zu verwerfen.

11. Benutzereinrichtung nach Anspruch 8 oder 9, wobei die Verarbeitungseinheit (402) ferner konfiguriert ist, um eine Übertragungsressource auszuwählen, um nicht gesendete durch die UE für den ersten Dienst erzeugte gepufferte Daten zu senden.

12. Benutzereinrichtung nach Anspruch 8 oder 9, wobei:
die Empfangseinheit (401) ferner konfiguriert ist, um von der Basisstation gesendete Datenfunkträger(DRB)konfigurationsinformationen zu empfangen;
die Verarbeitungseinheit (402) ferner konfiguriert ist, um als ein DRB auf einer Uu-Schnittstelle basierend auf den DRB-Konfigurationsinformationen einen Direktverknüpfungsträger zum Übertragen des ersten Dienstes neu zu konfigurieren; und
die Verarbeitungseinheit (402) ferner konfiguriert ist, um die Sendeeinheit anzuweisen, nicht gesendete gepufferte Daten des ersten Dienstes durch den DRB auf der Uu-Schnittstelle zu senden.

13. Benutzereinrichtung nach Anspruch 8 oder 9, wobei:
die Empfangseinheit (401) ferner konfiguriert ist, um von der Basisstation gesendete Datenfunkträger(DRB)konfigurationsinformationen zu empfangen; und
die Verarbeitungseinheit (402) ferner für Folgendes konfiguriert ist:
Einrichten eines DRB auf einer Uu-Schnittstelle basierend auf den DRB-Konfigurationsinformationen und Anweisen der Sendeeinheit, nicht gesendete gepufferte Daten des ersten Dienstes durch Verwenden des DRB auf der Uu-Schnittstelle zu senden.

## Revendications

1. Procédé de traitement de mémoire tampon, comprenant :
le déclenchement (301), par un équipement utilisateur, EU, d'un rapport d'état de mémoire tampon de liaison directe, le rapport d'état de mémoire tampon de liaison directe étant au moins utilisé pour signaler une quantité de données mises en mémoire tampon générées par l'EU pour un premier service, et le premier service étant actuellement transmis dans un mode de communication directe D2D, dispositif à dispositif ; et
lorsque l'EU détermine de transmettre le premier service dans un mode différent, l'arrêt (302), par l'EU, du signalement de la quantité des données mises en mémoire tampon générées par l'EU pour le premier service à une station de base,
**caractérisé en ce que** le mode différent est un mode relais de station de base, l'arrêt (302), par l'EU, du signalement de la quantité des données mises en mémoire tampon générées par l'EU pour le premier service à une station de base comprenant :
le saut de l'étape, par l'EU, lors de l'envoi du rapport d'état de mémoire tampon de liaison directe à la station de base, l'ajout de la quantité des données mises en mémoire tampon générées par l'EU pour le premier service.

2. Procédé selon la revendication 1, dans lequel la détermination (301), par l'EU, de transmettre le premier service dans un mode relais de station de base comprend :
la réception, par l'EU, de premières informations envoyées par la station de base, les premières informations étant utilisées pour ordonner à l'EU de commuter un mode de transmission du premier service d'une transmission à liaison directe à une transmission par relais de station de base ; et
la détermination, sur la base des premières informations, de transmettre le premier service dans le mode relais de station de base ; ou
la détermination, par l'EU, sur la base d'informations préconfigurées, de transmettre le premier service dans le mode relais de station de base.

3. Procédé selon la revendication 1 ou 2, dans lequel après la détermination (301), par l'EU, de transmettre le premier service dans un mode relais de station de base, le procédé comprend en outre :
le rejet, par l'EU, de données mises en mémoire tampon non envoyées générées par l'EU pour le premier service.

4. Procédé selon la revendication 1 ou 2, dans lequel, après la détermination (301), par l'EU, de transmettre le premier service dans un mode relais de station de base, le procédé comprend en outre :
la sélection, par l'EU, d'une ressource de transmission pour envoyer des données mises en mémoire tampon non envoyées générées par l'EU pour le premier service.

5. Procédé selon la revendication 1 ou la revendication 2, dans lequel le procédé comprend en outre :
la réception, par l'EU, des informations de configuration de support radio de données, DRB, envoyées par la station de base ; et
après la détermination (301), par l'EU, de transmettre le premier service dans un mode relais de station de base, le procédé comprend en outre :
la reconfiguration, en tant que DRB sur une interface Uu par l'EU sur la base des informations de configuration DRB, d'un support de liaison directe pour transmettre le premier service, et l'envoi de données mises en mémoire tampon non envoyées du premier service par le DRB sur l'interface Uu.

6. Procédé selon la revendication 1 ou la revendication 2, dans lequel le procédé comprend en outre :
la réception, par l'EU, des informations de configuration de support radio de données, DRB, envoyées par la station de base ; et
après la détermination (301), par l'EU, de transmettre le premier service dans un mode relais de station de base, le procédé comprend en outre :
l'installation, par l'EU, d'un DRB sur une interface Uu sur la base des informations de configuration DRB, et l'envoi de données mises en mémoire tampon non envoyées du premier service en utilisant le DRB sur l'interface Uu.

7. Procédé selon la revendication 5 ou 6, dans lequel les informations de configuration DRB peuvent être comprises dans les premières informations.

8. Équipement utilisateur, EU, comprenant une unité de réception (401), une unité de traitement (402) et une unité d'envoi (403), dans lequel :
l'unité de traitement (402) est configurée pour déclencher un rapport d'état de mémoire tampon de liaison directe, le rapport d'état de mémoire tampon de liaison directe étant au moins utilisé pour signaler une quantité de données mises en mémoire tampon générées par l'EU pour un premier service, et le premier service étant actuellement transmis dans un mode de communication directe D2D, dispositif à dispositif ; et
l'unité de traitement (402) étant configurée pour : déterminer de transmettre le premier service dans un mode différent et arrêter de signaler la quantité de données mises en mémoire tampon générées par l'EU pour le premier service à une station de base,
**caractérisé en ce que** le mode différent est un mode relais de station de base, l'unité de traitement (402) étant configurée pour arrêter de signaler la quantité des données mises en mémoire tampon générées par l'EU pour le premier service à une station de base, comprend :
l'unité de traitement (402) qui est configurée pour ordonner à l'unité d'envoi de sauter, lors de l'envoi du rapport d'état de mémoire tampon de liaison directe, l'ajout de la quantité des données mises en mémoire tampon générées par l'EU pour le premier service.

9. Équipement utilisateur selon la revendication 8, dans lequel :
l'unité de réception (4019 est configurée pour recevoir de premières informations envoyées par la station de base, les premières informations étant utilisées pour ordonner à l'EU de commuter un mode de transmission du premier service d'une transmission à liaison directe à une transmission de relais de station de base ; et
en ce que l'unité de traitement (402) étant configurée pour déterminer la transmission du premier service en mode relais de station de base comprend : l'unité de traitement qui est configurée pour déterminer, sur la base des premières informations, la transmission du premier service dans le mode relais de station de base ; ou
l'unité de traitement (402) qui est configurée pour déterminer, sur la base d'informations préconfigurées, la transmission du premier service dans le mode relais de station de base.

10. Équipement utilisateur selon la revendication 8 ou 9, dans lequel l'unité de traitement (402) est en outre configurée pour rejeter des données mises en mémoire tampon non envoyées générées par l'EU pour le premier service.

11. Équipement utilisateur selon la revendication 8 ou 9, dans lequel l'unité de traitement (402) est en outre configurée pour sélectionner une ressource de transmission pour envoyer des données mises en mémoire tampon non envoyées générées par l'EU pour le premier service.

12. Équipement utilisateur selon la revendication 8 ou 9, dans lequel :
l'unité de réception (401) est en outre configurée pour recevoir des informations de configuration de support radio de données, DRB, envoyées par la station de base ;
l'unité de traitement (402) est en outre configurée pour reconfigurer, en tant que DRB sur une interface Uu sur la base des informations de configuration DRB, un support de liaison directe pour transmettre le premier service ; et
l'unité de traitement (402) est en outre configurée pour ordonner à l'unité d'envoi d'envoyer des données mises en mémoire tampon non envoyées du premier service par le DRB sur l'interface Uu.

13. Équipement utilisateur selon la revendication 8 ou 9, dans lequel :
l'unité de réception (401) est en outre configurée pour recevoir des informations de configuration de support radio de données, DRB, envoyées par la station de base ; et
l'unité de traitement (402) est en outre configurée pour : installer un DRB sur une interface Uu sur la base des informations de configuration DRB, et ordonner à l'unité d'envoi d'envoyer des données mises en mémoire tampon non envoyées du premier service en utilisant le DRB sur l'interface Uu.
